# EUROPEAN PATENT SPECIFICATION

(11) **EP 2 796 266 B1**
(45) Date of publication and mention of the grant of the patent: **08.03.2017**
(21) Application number: 12860610.0
(22) Date of filing: 12.11.2012
(51) Int. Cl.: B29C 45/00, C08L 101/00, C08J 5/04, C08L 23/12, B29C 33/70, B29K 101/12, B29K 105/06

(54) **THERMOPLASTIC RESIN MOLDING AND MANUFACTURING METHOD THEREFOR**
THERMOPLASTISCHE HARZFORM UND HERSTELLUNGSVERFAHREN DAFÜR
MOULAGE DE RÉSINE THERMOPLASTIQUE ET PROCÉDÉ DE FABRICATION S'Y RAPPORTANT

(30) Priority: 21.12.2011 JP 2011280342
(43) Date of publication of application: 29.10.2014
(73) Proprietor: Toyota Boshoku Kabushiki Kaisha, Kariya-shi, Aichi 448-8651 (JP)
(72) Inventor: HASHIBA Masanori, Kariya-shi Aichi 448-8651 (JP); TAMAKI Kousuke, Kariya-shi Aichi 448-8651 (JP); MARUYAMA Kazushige, Kariya-shi Aichi 448-8651 (JP); FUJII Kaoru, Kariya-shi Aichi 448-8651 (JP); SHIRASAKI Tomohiro, Kariya-shi Aichi 448-8651 (JP)
(74) Representative: TBK
(86) International application number: PCT/JP2012/079305
(87) International publication number: WO 2013/094343

(56) References cited:
- EP-A1- 2 292 698
- WO-A1-2004/071744
- JP-A- 2002 003 723
- JP-A- 2005 029 601
- JP-A- 2005 035 134
- JP-A- 2005 105 245
- JP-A- 2008 088 358
- US-A1- 2009 182 071
- Erwin Bürkle ET AL: "Process Energy-Efficient Processing of Natural Fiber-Reinforced Plastics", Kunststoffe international, 2009, pages 25-29, XP055142331, Retrieved from the Internet: URL:http://www.kraussmaffei.de/media/files /kmdownloadlocal/en/Natural_Fiber-Reinforc ed_Plastics_022009.pdf [retrieved on 2014-09-24]

## Description

### [FIELD OF THE INVENTION]

The present invention relates to a thermoplastic resin molded article and a production method for the same. More specifically, the invention relates to a thermoplastic resin molded article which is light weight and has reduced environmental impact, and a production method for the same which enables efficient production of the thermoplastic resin molded article and sufficient inhibition of rusting in an injection molding die.

### [BACKGROUND ART]

Molded articles produced by injection molding using a thermoplastic resin as a raw material are conventionally used in a structural part such as an air cleaner case in the field of automobiles and the like (see Patent Literatures 1 and 2). Such structural part is required to have sufficient mechanical strength, and a resin reinforcing material such as a glass fiber and talc that have a high specific gravity is generally used as a raw material, in combination with a thermoplastic resin.

However, conventional thermoplastic resin molded articles containing a resin reinforcing material such as a glass fiber and talc in combination have a high specific gravity and a heavy weight, and thus are required to be further reduced in weight.

In light of current global warming problems, the need for using a plant-derived material to reduce the quantity of carbon dioxide generated based on the so-called "carbon neutrality" concept is growing. Also in the field of automobiles and the like, it is now required to use a plant-derived material in the production of a structural part and the like. Therefore, composite materials produced by mixing a thermoplastic resin and a plant material are now being reviewed for various applications.

### [PRIOR ART LITERATURE]

### [PATENT LITERATURE]

Patent Literature 1: JP A 2006-138203
Patent Literature 2: JP A 2006-117006

US2009182071 (A1) relates to a crystalline polyamide 6 in a compounding extrusion process to make wood flour-polyolefin composite. The wood plastic composite pellet can be post-blended with reinforced polyolefin pellets in an injection molding step to produce hybrid fibrous composites.

### [SUMMARY OF THE INVENTION]

### [PROBLEMS THAT THE INVENTION IS TO SOLVE]

As regards conventional molded articles containing a resin reinforcing material such as a glass fiber and talc, proposal for environmental impact of an amount of carbon dioxide emissions or proposal on the use of a plant-derived material has not been made. In an actual situation, a thermoplastic resin molded article having a light weight and reduced environmental impact is demanded.

On the other hand, the present applicant found out a production method of a thermoplastic resin composition into which a plant fiber can be incorporated in a large amount and which has sufficient flowability when used, for example, in injection molding, and filed a patent application on this technique (see JP A 2011-5742).

As a result of repeated additional reviews later, it has been confirmed that, in injection molding of a thermoplastic resin composition containing a plant fiber added thereto, a plant material is thermally decomposed by a heat generated at the time of molding, thereby causing the production of a corrosive gas. Specifically, this is considered to be caused, for example, by separation of the acetyl group in hemicellulose contained in plants by thermal decomposition, leading to the generation of acetic acid and formic acid, and the amounts of these acids generated are considered to increase along with temperature increase. It has been revealed that load such as corrosion and discoloration is likely to be generated in a die or the like used in injection molding by a component such as acetic acid caused by the heat at the time of molding or by oxygen and water present circumferentially, which imposes burden on a molding die. Further, it has been revealed that the corrosion or the like generated in the die is likely to cause a rust transfer from the die to the molded article and a defective appearance on a surface of the molded article such as an occurrence of silver (shininess on the surface of the molded article), thereby impairing the design of the molded article.

The invention was conceived in view of the above situation. The present invention aims at providing a thermoplastic resin molded article which is light weight and has reduced environmental impact, and a production method for the same which enables efficient production of the thermoplastic resin molded article and sufficient inhibition of rusting in an injection molding die.

### [MEANS FOR SOLVING PROBLEMS]

The invention as described in Claim 1 in order to solve the above problems is a thermoplastic resin molded article comprising one or two thermoplastic resin(s) and a plant fiber as main components, such that the ratio of the sum of the thermoplastic resin(s) and the plant fiber is in the range from 90% to 100% by mass when an amount of the entire thermoplastic resin molded article is defined as 100% by mass, and having a content ratio between said thermoplastic resin(s) and said plant fiber of 4:6 to 5:5, wherein the one thermoplastic resin is a polyolefin or wherein the two thermoplastic resins are a polyolefin in combination with an acid-modified polyolefin, wherein said thermoplastic resin molded article is obtained by injection molding of a thermoplastic resin composition that comprises the one or two thermoplastic resin(s) and a plant fiber and has a water content of 0.4% or less.

Preferred embodiments of the invention are described in Claims 2 to 5.

The invention as described in Claim 6 is a production method of a thermoplastic resin molded article comprising one or two thermoplastic resin(s) and a plant fiber as main components, such that the ratio of the sum of the thermoplastic resin(s) and the plant fiber is in the range from 90% to 100% by mass when an amount of the entire thermoplastic resin molded article is defined as 100% by mass, and having a content ratio between said thermoplastic resin and said plant fiber of 4:6 to 5:5, wherein the one thermoplastic resin is a polyolefin or wherein the two thermoplastic resins are a polyolefin in combination with an acid-modified polyolefin, wherein a thermoplastic resin composition that comprises the one or two thermoplastic resin(s) and a plant fiber and has a water content of 0.4% or less is subjected to injection molding.
A preferred embodiment of the invention is described in Claim 7.

### [EFFECT OF THE INVENTION]

The thermoplastic resin molded article of the present invention contains a plant fiber in a specific proportion, and thus is light weight and small in environmental impact from the viewpoint of carbon neutrality (namely, small amount of carbon dioxide emissions based on carbon neutrality). Since the thermoplastic resin molded article is obtained by injection molding of a thermoplastic resin composition controlled to have a specific water content, and the molded article is sufficiently inhibited in terms of a rust transfer from a die to a surface of the molded article and a defective appearance caused by an occurrence of silver or the like, and has excellent appearance.

In the case where the thermoplastic resin molded article of the present invention is provided with a plate-like part having a protruding part, a depth of a recess at a position corresponding to the protruding part is 0.1 mm or less. Since a degree of the recess (so called, "sink") created due to a molding shrinkage when a protruding part such as a rib and a boss is formed by injection molding is reduced, an excellent appearance can be obtained.

In the production method of the thermoplastic resin molded article of the present invention, a water content of a thermoplastic resin composition as a starting material is controlled, thereby making it possible to reduce the amount of steam at the time of molding and to sufficiently inhibit rusting in an injection molding die. Therefore, it is possible to inhibit a rust transfer from the die to a surface of the molded article and a defective appearance on the surface of the molded article due to the occurrence of silver or the like, and to improve the design of the resultant thermoplastic resin molded article. Additionally, the use of a thermoplastic resin composition containing a plant fiber as a raw material makes it possible to reduce the amount of carbon dioxide emissions based on carbon neutrality and to effectively produce a light weight thermoplastic resin molded article. Further, a load on the molding die can be reduced, thereby improving maintainability of the molding die without affecting productivity or quality of the molded article (product).

### [BRIEF DESCRIPTION OF THE DRAWINGS]

The present invention is further described in the detailed description which follows, in reference to the noted plurality of drawings by way of non-limiting examples of exemplary embodiments of the present invention, in which like reference numerals represent similar parts throughout the several views of the drawings, and wherein:
Fig. 1 is a schematic view showing the configuration of an air cleaner case provided with an air cleaner case cap;
Fig. 2 is a schematic view showing the configuration of an air cleaner case provided with an air cleaner case cap;
Fig. 3 is a schematic view showing an I-I-line cross section of an essential part A in Fig. 2;
Fig. 4 is a graph showing the correlation between molding temperature and amount of acetic acid generated when a thermoplastic resin composition containing kenaf fiber and PP is used; and
Fig. 5 is a schematic view showing a bar flow die.

### [DESCRIPTION OF EMBODIMENTS]

The particulars shown herein are by way of example and for purposes of illustrative discussion of the embodiments of the present invention only and are presented in the cause of providing what is believed to be the most useful and readily understood description of the principles and conceptual aspects of the present invention. In this regard, no attempt is made to show structural details of the present invention in more detail than is necessary for the fundamental understanding of the present invention, the description is taken with the drawings making apparent to those skilled in the art how the forms of the present invention may be embodied in practice.

Hereinafter, the present invention will be described in detail.

### 1. Thermoplastic resin molded article

The thermoplastic resin molded article of the present invention is a thermoplastic resin molded article which contains one or two thermoplastic resin(s) and a plant fiber as main components and has a content ratio between the thermoplastic resin and the plant fiber (thermoplastic resin: plant fiber) of 4:6 to 5:5, and is characterized by obtaining by injection molding of a thermoplastic resin composition that contains a thermoplastic resin and a plant fiber and has a water content of 0.4% or less.

The "thermoplastic resin" contained in the thermoplastic resin molded article of the present invention is a polyolefin or a polyolefin in combination with an acid modified polyolefin. A
polyolefin such as polyethylene, polypropylene, and an ethylene propylene copolymer is preferred, and polypropylene and an ethylene propylene copolymer are more preferred. The thermoplastic resin molded article may contain either only one thermoplastic resin or two thermoplastic resins.

Preferably, the polyolefin (especially, polypropylene or an ethylene propylene copolymer) is contained in combination with an acid-modified polyolefin.

In the case where the acid-modified polyolefin is further contained in the molded article, mechanical properties of the molded article are further improved, being favorable.

In the case where the acid-modified polyolefin is contained, the content ratio of this acid-modified polyolefin is preferably in the range from 0.5% to 20% by mass, more preferably from 0.6% to 15% by mass, and further preferably from 0.7% to 10% by mass when an amount of the entire thermoplastic resin is defined as 100% by mass. When the content is in the range from 1% to 30% by mass, mechanical properties of the molded article can be improved.

The "plant fiber" contained in the thermoplastic resin molded article of the present invention is a plant-derived fiber. The plant fiber may be a plant fiber obtained from various kinds of plants such as kenaf, jute hemp, manila hemp, sisal hemp, gampi, Mitsumata, Kozo, banana, pineapple, coconut, corn, sugarcane, bagasse, palm, papyrus, reed grass, esparto, Sabi grass, oat, rice plant, bamboo, various conifer trees (Japanese cedar, Japanese cypress, and others), broad leaf tree, cotton and others.

Types of the plant fiber contained may be single or two or more. The segment of the plant used as the above-mentioned plant fiber is not particularly limited so long as the segment has a segment constituting the plant such as non-woody parts, woody parts, leaf parts, stalk section and root parts. Furthermore, only a specific segment thereof may be used or a different segment with two parts or more may be used.

As the plant fiber, a fiber derived from kenaf is preferred. Kenaf is a very fast growing annual grass and has excellent absorbitity of carbon dioxide so that it can contribute to reducing an amount of carbon dioxide in the air, thus effectively utilizing forest resources and others. Kenaf is a very fast growing annual grass having a woody stem and is classified into malvaceae. The kenaf includes hibiscus cannabinus and hibiscus sabdariffa of scientific names, and further includes Indian hemp, Cuban kenaf, kenaf, roselle, mesta, bimli hemp, ambary hemp, Bombay hemp and the like of common names.

The thermoplastic resin molded article of the present invention contains the above-described thermoplastic resin and a plant fiber as main components, and may contain other components.

A ratio of the sum of the main components, i.e., thermoplastic resin and plant fiber is in the range from 90% to 100% by mass, preferably from 95% to 100% by mass, and further preferably from 97% to 100% by mass when an amount of the entire thermoplastic resin molded article is defined as 100% by mass.

Further, a content ratio between the thermoplastic resin and the plant fiber (thermoplastic resin: plant fiber) is in the range from 4:6 to 5:5. When the content ratio is in the range from 7:3 to 4:6, it is possible to sufficiently reduce the weight of the thermoplastic resin molded article while maintaining mechanical properties equivalent to those of a thermoplastic resin molded article consisting of a conventional composition which contains talc and a thermoplastic resin.

The above-described other components are not particularly limited, and example thereof includes various additives such as an antioxidant, an ultraviolet absorbent, an antistatic agent, a flame retardant, an antibacterial agent, and a coloring agent. The additives may be contained singly or in combination of two or more types.

The thermoplastic resin molded article of the present invention contains a thermoplastic resin and a plant fiber, and is obtained by injection molding of a thermoplastic resin composition having a water content of 0.4% or less. The shape, dimension and the like of the molded article are not particularly limited. In the meantime, the "thermoplastic resin composition" as a starting material and the "injection molding" will be explained in detail in the subsequent section "Production method of thermoplastic resin molded article."

The thermoplastic resin molded article of the present invention may be provided with a protruding part (reinforcing part) such as a rib and a boss in order to improve strength partially or entirely depending on the intended use. Number, position, shape, dimension and the like of the reinforcing part(s) to be formed are not particularly limited.

Since the thermoplastic resin molded article of the present invention is produced by a specific production method, when a protruding part such as a rib and a boss is formed at one surface side by injection molding, a degree of a recess (sink) due to molding shrinkage created at a position corresponding to the protruding part on the other surface is low and the thermoplastic resin molded article has an excellent appearance.

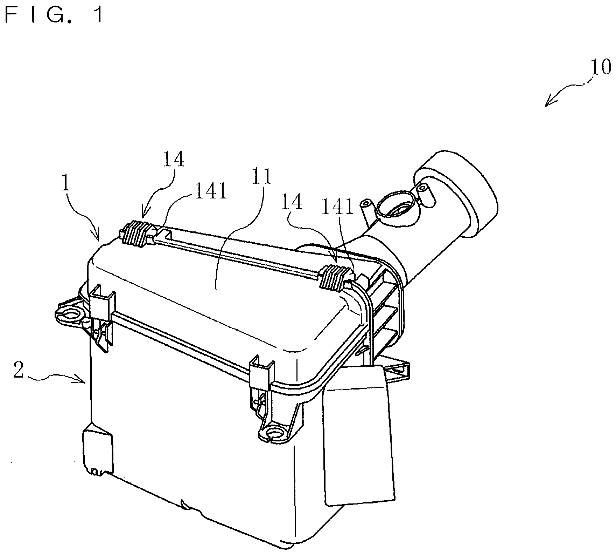

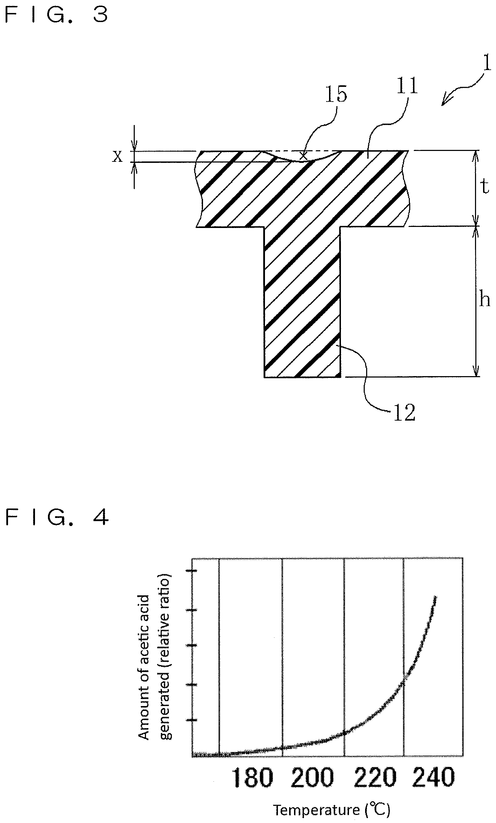

Specific example is a thermoplastic resin molded article which is provided with a plate-like part having a thickness of 0.5 to 10 mm [see a top plate part 11 shown in Figs. 1 to 3], wherein a protruding part having a protrusion amount of 0.5 to 50 mm [see a rib 12 shown in Figs. 1 to 3] is formed at one surface side of the plate-like part, and a depth of a recess [see a recess 15 shown in Fig. 3] at a position corresponding to the protruding part formed on the other surface of the plate-like part is 0.1 mm or less.

The thickness of the plate-like part [see (t) shown in Fig. 3] is in the range from 0.5 to 10 mm, preferably from 1.0 to 5.0 mm, and more preferably from 1.5 to 3.0 mm.

The protrusion amount of the protruding part [see (h) shown in Fig. 3] is in the range from 0.5 to 50 mm, preferably from 1.0 to 40 mm, and more preferably from 2.0 to 30 mm.

Further, the depth of the recess [see (x) shown in Fig. 3] is 0.1 mm or less, preferably 0.08 mm or less, and more preferably 0.06 mm or less.

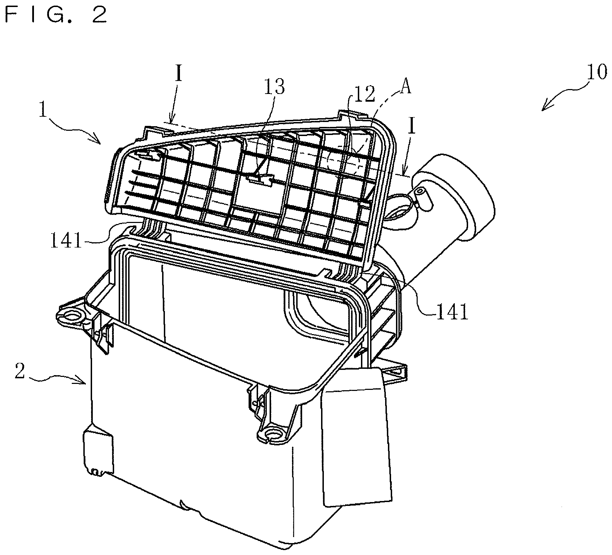

The thermoplastic resin molded article of the present invention may have protruding parts on both sides of the plate-like part so as to be formed at corresponding positions when a part to which large load is applied depending on the intended use. (For example, the part is a hinge part 14 of an air cleaner case cap 1 in an air cleaner case 10 shown in Figs. 1 and 2). Specifically, protruding parts may be formed on both of one surface side and the other surface side of the plate-like part. At this time, a shape of the protruding part on one surface side and a shape of the corresponding protruding part of the other surface may be identical or different.

The intended use of the thermoplastic resin molded article of the present invention is not particularly limited. The thermoplastic resin molded article of the present invention may be used as, for example, an interior material, an exterior material, a structural material and the like for an automobile, a railcar, a ship, an aircraft and others. Among these, examples of the automobile include an interior material, an exterior material, an engine-related part, an instrument panel, and the like. Specific example thereof includes a door base material, a package tray, a pillar garnish, a switch base, a quarter panel, a core material for armrest, a door trim, a sheet structural material, a sheet backboard, a ceiling material, a console box, a dashboard, an instrument panel, a deck trim, a bumper, a spoiler, a cowling, an air cleaner case cap, an air cleaner container, and the like. Further, the intended uses other than the above-described automobile include an interior material, an exterior material and a structural material for an architectural structure, furniture, and others. Specific example thereof includes a door surface finish material and a door structural material of the architectural structure; a surface finish material and a structural material of furniture such as a desk, a chair, a shelf, and a drawer; and the like. A package, a storage body such as a tray, a protective member, a partition member, a casing for home electric appliance product, and the like are further exemplified.

### 2. Production method of thermoplastic resin molded article

The production method of a thermoplastic resin molded article in the present invention is a production method of a thermoplastic resin molded article comprising one or two thermoplastic resin(s) and a plant fiber as main components, such that the ratio of the sum of the thermoplastic resin(s) and the plant fiber is in the range from 90% to 100% by mass when an amount of the entire thermoplastic resin molded article is defined as 100% by mass, and having a content ratio between said thermoplastic resin and said plant fiber of 4:6 to 5:5, wherein the one thermoplastic resin is a polyolefin or wherein the two thermoplastic resins are a polyolefin in combination with an acid-modified polyolefin, wherein a thermoplastic resin composition that comprises the one or two thermoplastic resin(s) and a plant fiber and has a water content of 0.4% or less is subjected to injection molding.

The above-described "thermoplastic resin composition" contains a thermoplastic resin and a plant fiber.

As the thermoplastic resin composition, a composition prepared by kneading and mixing a thermoplastic resin, a plant fiber, and optionally other components (additives) with a mixing device is normally used. In the meantime, the shapes of the plant fiber at a raw material stage and at a product stage may be different in some cases.

The "thermoplastic resin" described in the,above section "1. Thermoplastic resin molded article" is the above-described "thermoplastic resin" contained in the thermoplastic resin composition.

The thermoplastic resin is a polyolefin, wherein polyethylene, polypropylene and an ethylene propylene copolymer is preferable, and polypropylene and an ethylene propylene copolymer are more preferable.

A melt flow rate (MFR) that represents the flowing performance of the above-described polyolefin is preferably in the range from 1.0 to 200 g/10 min., more preferably from 5.0 to 100 g/10 min., and further preferably from 10 to 60 g/10 min. The measurement of MFR is carried out under the following conditions: a load of 2.16 kg and a temperature of 230°C based on JIS K7210.

A polyolefin resin (especially, polypropylene or an ethylene propylene copolymer) is preferably used in combination with an acid-modified polyolefin. This case leads to a molded article having more improved mechanical properties.

The above-described various polyolefin can be used as a base resin for the acid-modified polyolefin. Further, a non-modified polyolefin contained in the thermoplastic resin composition and a base resin for acid modification are preferably resins of the same kind. When resins of the same kind are used, the respective resins are more preferably small in differences of average molecular weight, density and the like. When the resins used are copolymers, they are more preferably small in differences of proportions of the respective monomer units.

The introduction method of an acid group into the acid-modified polyolefin is also not particularly limited. Introduction thereof can be carried out by reacting a compound having an acid group with a polyolefin, what is called, graft polymerization. The compound having an acid group is also not particularly limited, and example thereof includes maleic anhydride, itaconic anhydride, succinic anhydride, glutaric anhydride, adipic anhydride, maleic acid, itaconic acid, fumaric acid, acrylic acid, methacrylic acid, and the like. These compounds may be used singly or in combination of two or more types thereof. Among these, an acid anhydride is frequently used, and, especially, maleic anhydride and itaconic anhydride are used in many cases.

An introduced amount of the acid group into the acid-modified polyolefin is not particularly limited. The preferable amount is to provide an acid value of 5 or more. An acid-modified polyolefin having the amount to provide an acid value of 5 or more can sufficiently improve the mechanical properties of the molded article without incorporation of the acid-modified polyolefin in a large amount. The acid value is more preferably in the range from 10 to 80, further preferably from 15 to 70, and particularly preferably from 20 to 60. The acid value can be measured in accordance with JIS K0070.

A melt flow rate (MFR) that represents the flowing performance of the acid-modified polyolefin is preferably in the range from 0.5 to 100 g/10 min., more preferably from 5 to 80 g/10 min., and further preferably from 10 to 60 g/10 min. The measurement of MFR is carried out under the following conditions: a load of 2.16 kg and a temperature of 180°C based on JIS K7210.

In the case where the acid-modified polyolefin is used in combination, a proportion of the acid-modified polyolefin incorporated is preferably in the range from 1% to 30% by mass, more preferably from 0.6% to 15% by mass, and further preferably from 0.7% to 10% by mass when an amount of the entire thermoplastic resin is defined as 100% by mass. When the incorporated amount of the acid-modified polyolefin is in the range from 1% to 30% by mass, a flowability of the thermoplastic resin composition at the time of molding such as injection molding can be dramatically improved, and mechanical properties of the resultant molded article can be improved.

The "plant fiber" described in the above section "1. Thermoplastic resin molded article" can be indicated as the above-described "plant fiber" contained in the thermoplastic resin composition.

Especially, when kenaf fiber is used as the plant fiber, an outer layer portion referred to as bast having a strong fiber can be used.

A fiber length and a fiber diameter of the plant fiber are not particularly limited. A ratio (L/t) between the fiber length (L) and fiber diameter (t) is preferably in the range from 5 to 20,000. The fiber length of the plant fiber is normally in the range from 10 to 300 mm, and the fiber diameter is normally in the range from 10 to 150 µm. The fiber length is measured in accordance with JIS L 1015 (direct method) in a state in which one plant fiber extends linearly without being stretched. In addition, the fiber diameter of the plant fiber is determined by measuring a diameter of the center area of the plant fiber (for which the length is measured) in the lengthwise direction using an optical microscope.

Further, an average fiber length and average fiber diameter of the plant fiber are not particularly limited. The average fiber length is preferably 100 mm or shorter (normally, 10 mm or longer). A plant fiber having an average fiber length of 100 mm or less can be easily mixed with a thermoplastic resin. The average length of the plant fiber is determined by measuring lengths of two hundred randomly selected plant fibers in accordance with JIS L 1015 (direct method) in a state in which each plant fiber extends linearly without being stretched, and calculating the average value. The average diameter of the plant fibers is preferably 100 µm or shorter (normally 15 µm or longer). The average diameter of the plant fibers is determined by measuring the diameters of the center area (in the lengthwise direction) of two hundred randomly selected plant fibers using an optical microscope, and calculating the average value.

A plant fiber may be mixed with a thermoplastic resin without any processing. The plant fiber may be mixed with a thermoplastic resin after cutting or pulverizing into a predetermined length. Further, a fiber pellet having predetermined shape and dimension formed by means of a pelletizing device may be mixed with the thermoplastic resin.

The above-described thermoplastic resin composition preferably contains the above-described thermoplastic resin and plant fiber as main components. A ratio of the sum of the thermoplastic resin and plant fiber is in the range from 90% to 100% by mass, preferably from 95% to 100% by mass, and further preferably from 97% to 100% by mass when an amount of the entire thermoplastic resin composition is defined as 100% by mass. The ratio is normally identical with a ratio of a sum of the thermoplastic resin and plant fiber incorporated as raw materials at the time of preparation of a thermoplastic resin composition.

Further, a content ratio between the thermoplastic resin and the plant fiber (thermoplastic resin: plant fiber) is in the range from 4:6 to 5:5. This content ratio is normally identical with an incorporation ratio between the thermoplastic resin and the plant fiber at the time of preparation of a thermoplastic resin composition.

Thereby, it is possible to obtain a thermoplastic resin molded article which has mechanical properties equivalent to those of a thermoplastic resin molded article consisting of a conventional composition which contains talc and a thermoplastic resin, and which is sufficiently reduced in weight.

The above-described other components that is optionally incorporated to the thermoplastic resin composition are not particularly limited, and example thereof includes various additives such as an antioxidant, an ultraviolet absorbent, an antistatic agent, a flame retardant, an antibacterial agent, and a coloring agent. The additives may be contained singly or in combination of two or more types.

The form of the above-described thermoplastic resin composition is not particularly limited. The form may be a mixture itself obtained by mixing raw materials, a pulverized mixture obtained by rolling and thereafter pulverizing a mixture, or a pellet of the pulverized mixture. Especially, a pulverized mixture and a pelletized mixture are preferred from the viewpoint of the operability at the time of injection molding.

The shape and particle diameter of a particle of the above-described pulverized mixture are not particularly limited. The particle diameter (maximum dimension) of the particle may be in the range from 1 to 10 mm, and especially from 3 to 8 mm.

In addition, the shape and dimension of the above-described pelletized thermoplastic resin composition are not particularly limited. The pellet preferably has a columnar shape such as a cylindrical shape. The maximum dimension of the pellet is preferably 1 mm or longer (normally, 20 mm or shorter), more preferably in the range from 1 to 10 mm, and particularly from 2 to 7 mm.

Specific production method of a thermoplastic resin composition, a pulverized thermoplastic resin composition (pulverized mixture), and a pelletized thermoplastic resin composition are described in JP A 2011-5742.

In the production method of the thermoplastic resin molded article in the present invention, a thermoplastic resin composition having a water content controlled within a specific range is used when injection molding is carried out.

The water content in the thermoplastic resin composition at the time of injection molding is 0.4% or less, preferably 0.3% or less, and more preferably 0.2% or less. When the water content is 0.4% or less, an amount of steam at the time of injection molding is reduced, thereby making it possible to sufficiently inhibit rusting in an injection molding die. Therefore, it is possible to inhibit the transfer of rust from a die and a defective appearance at a surface of the resultant thermoplastic resin molded article such as an occurrence of silver, and to improve design of the molded article. Further, a load on the molding die can be reduced, thereby improving maintainability of the molding die without affecting productivity or the quality of the molded article (product).

A method for controlling the water content in the thermoplastic resin composition to 0.4% or less is not particularly limited. Specifically, the water content can be controlled by drying by heating, drying by dehumidification, drying under reduced pressure or combining these methods.

Controlling conditions are not particularly limited, and can be suitably determined. Specifically, the water content can be controlled to 0.4% or less by drying the thermoplastic resin composition at a temperature ranging from 100°C to 130°C (especially, 100°C to 120°C) for 0.5 hour or longer (especially, 1 hour or longer).

The water content is obtained by heating 5 g of a material up to 130°C and carrying out measurement until the amount of weight reduction due to time change reaches 0.05%/min., by means of a heating moisture meter. A heating moisture meter model "MX-50" manufactured by A & D Company Limited can be used as the heating moisture meter.

An apparatus, molding conditions and the like for injection molding are not particularly limited. They may be appropriately selected and determined depending, for example, on types of the thermoplastic resin or the shape and intended use of a molded article.

In particular, a molding temperature employed in injection molding is preferably in the range from 180°C to 230°C, and especially from 190°C to 210°C. In this case, injection molding can be carried out in a state where a generated amount of acetic acid which causes rusting at the time of molding (see Fig. 4) is inhibited.

Fig. 4 shows a graph indicating a correlation between the molding temperature and the generated amount of acetic acid in the case where a thermoplastic resin composition consisting of kenaf fiber and PP [water content: 3.0%; kenaf fiber: PP (content ratio) = 4:6] is used.

### [EXAMPLES]

Hereinafter, the present invention will be described in more detail by way of Examples.

### 1. Production of thermoplastic resin molded article (Reference Examples 1, 2 and 5 to 7, Examples 3 and 4 and Comparative Examples 1 to 3)

### Reference Example 1

### (1-1) Preparation of thermoplastic resin composition

Kenaf fibers made in Indonesia or Vietnam were cut with a pulverizer "RC250" manufactured by YOSHIKOH CO., LTD. (mesh: φ2 mm). Then the cut kenaf pulverized fibers were supplied to a pelletizer "KP280" manufactured by KIKUKAWA ENTERPRISE INC. (die diameter: φ6.2 mm; length: 10 mm) at a feeder frequency of 40 Hz to prepare kenaf pellets at a roller frequency of 40 Hz.

Subsequently, 200 g of the resultant kenaf pellet having fiber length of 2mm, 292.5 g of polypropylene (PP) "VM970X" manufactured by SunAllomer Ltd., 7.5 g of acid-modified PP "Modic P908" manufactured by Mitsubishi Chemical Corporation, and 10 g of black master batch (colorant) "RMB920" manufactured by RHOMBIC Corporation were supplied (40:58.5:1.5:2 by mass ratio) into a mixing chamber having a volume of 5 L of a mixing and melting device described in WO 2004-076044. Materials were mixed at a rotating speed of a mixing blade of 2,250 rpm. Mixing was stopped while the time point of 5 seconds after the load (torque) applied to the blade was elevated and arrived at the torque peak was defined as the termination point, and a kenaf/PP-mixed molten resin was discharged. Then, the discharged block-like kenaf/PP-mixed molten resin was rolled into a plate having a thickness of 5 mm using a rolling roller manufactured by YASUDA-KOKI Co., Ltd. After that, the kenaf/PP-mixed rolled molten resin mixture was cooled and conveyed by means of "MMX224" manufactured by MARUYASU KIKAI CO., LTD., and pulverized by means of a pulverizer "42-20JM" manufactured by TRIA (mesh: φ5 mm) to prepare a flaky kenaf/PP pellet (thermoplastic resin composition) for injection molding having a width of about 4 mm and a length of about 5 mm. The density of this kenaf/PP pellet was 1.04 g/cm³.

### (1-2) Production of thermoplastic resin molded article

The prepared kenaf/PP pellets were dried at a temperature of 110°C for 4 hours using a resin dryer to control the water content of the material to 0.4%, and an injection molding machine "SE100DU" manufactured by Sumitomo Heavy Industries, Ltd. was used under the following conditions: a molding temperature of 190°C and a die temperature of 40°C to prepare a test piece having a size of 110 mm × 10 mm × 4 mm (in accordance with JIS K7171) for Reference Example 1.

### Reference Examples 2 and 5; and Examples 3 and 4

Test pieces (110 mm x 10 mm x 4 mm) for (Reference) Example 2 to 5 were produced in a similar manner as those in Reference Example 1 except the proportions of kenaf (plant fiber) and PP (thermoplastic resin) incorporated were changed as indicated in Table 1.

### Reference Example 6

The kenaf/PP pellets prepared in a similar manner as in Reference Example 1 were dried at a temperature of 110°C for 4 hours using a resin dryer to control the water content of the material to 0.4%, and an injection molding machine "SE100DU" manufactured by Sumitomo Heavy Industries, Ltd. was used under the following conditions: a molding temperature of 190°C and a die temperature of 40°C to prepare a test piece (110 mm x 10 mm x 2 mm) for Reference Example 6 different from that of Reference Example 1 only in thickness.

### Reference Example 7

The kenaf/PP pellets prepared in a similar manner as in Reference Example 1 were dried at a temperature of 110°C for 4 hours using a resin dryer to control the water content of the material to 0.2%, and an injection molding machine "SE100DU" manufactured by Sumitomo Heavy Industries, Ltd. was used under the following conditions: a molding temperature of 210°C and a die temperature of 40°C to prepare a test piece (110 mm x 10 mm x 2 mm) for Reference Example 7 different from that of Reference Example 1 only in thickness and water content of the material before injection molding.

### Comparative Example 1 (conventional product)

Polypropylene (PP) "CNX0228" manufactured by Japan Polypropylene Corporation was used and mixed with talc to prepare a talc PP pellet, and then the talc PP pellets were dried at a temperature of 110°C for 4 hours using a resin dryer. Subsequently, an injection molding machine "SE100DU" manufactured by Sumitomo Heavy Industries, Ltd. was used under the following conditions: a molding temperature of 220°C and a die temperature of 40°C to prepare a test piece (110 mm × 10 mm × 4 mm) for Comparative Example 1. The density of this kenaf/PP pellet was 1.14 g/cm³.

### Comparative Example 2 (conventional product)

Polypropylene (PP) "CNX0228" manufactured by Japan Polypropylene Corporation was used and mixed with talc to prepare a talc PP pellet, and then the talc PP pellets were dried at a temperature of 110°C for 4 hours using a resin dryer. Subsequently, an injection molding machine "SE100DU" manufactured by Sumitomo Heavy Industries, Ltd. was used under the following conditions: a molding temperature of 220°C and a die temperature of 40°C to prepare a test piece (110 mm × 10 mm × 2 mm) for Comparative Example 2 different from that of Comparative Example 1 in thickness.

### Comparative Example 3

The kenaf/PP pellets prepared in a similar manner as in Reference Example 1 were dried at a temperature of 110°C for 4 hours using a resin dryer to control the water content of the material to 1.0%, and an injection molding machine "SE100DU" manufactured by Sumitomo Heavy Industries, Ltd. was used under the following conditions: a molding temperature of 210°C and a die temperature of 40°C to prepare a test piece (110 mm x 10 mm × 2 mm) for Comparative Example 3 different from that of Reference Example 1 only in thickness and water content of the material before injection molding.

The details of the proportions of the raw materials incorporated, water content at the time of injection molding and thickness of the test piece in (Reference) Examples 1 to 7 and Comparative Examples 1 to 3 are indicated in Table 1.

**Table 1**

| | Proportion of raw material incorporated (%) | | | Water content (%) | Thickness (mm) |
|---|---|---|---|---|---|
| | Kenaf | Talc | PP | | |
| * Example 1 | 40 | - | 60 | 0.4 | 4.0 |
| * Example 2 | 30 | - | 70 | 0.4 | 4.0 |
| Example 3 | 50 | - | 50 | 0.4 | 4.0 |
| Example 4 | 60 | - | 40 | 0.4 | 4.0 |
| * Example 5 | 70 | - | 30 | 0.4 | 4.0 |
| * Example 6 | 40 | - | 60 | 0.4 | 2.0 |
| * Example 7 | 40 | - | 60 | 0.2 | 2.0 |
| Comparative Example 1 | - | 30 | 70 | - | 4.0 |
| Comparative Example 2 | - | 30 | 70 | - | 2.0 |
| Comparative Example 3 | 40 | - | 60 | 1.0 | 2.0 |

| | | | | | |
|---|---|---|---|---|---|
| * Reference | | | | | |

### 2. Evaluation

### (2-1) Bending property and flowability

The respective test pieces of (Reference) Examples 1 to 5 and Comparative Example 1 different in proportions of the raw materials incorporated, obtained in the above section "1. Production of thermoplastic resin molded article", were used to carry out a bending test in accordance with JIS K7171, thereby calculating their bending strength.

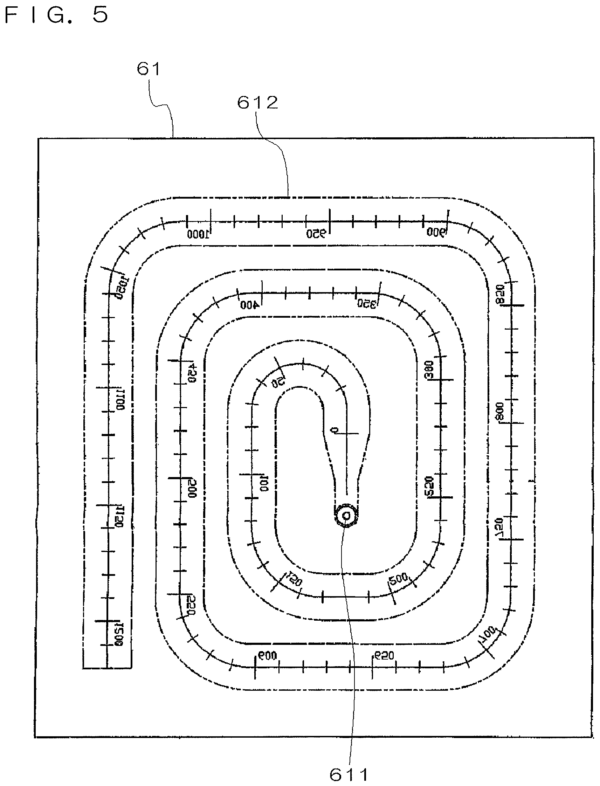

Flowability was measured by connecting a bar flow die (die 61 as shown in Fig. 5 having an injection port 611 with a port diameter of 10 mm and an angularly spiral cavity 612 with a width of 20 mm and a thickness of 2 mm) to the injection molding machine, and defining, as flow length, the length of a molded article obtained by injection molding under the following conditions: a cylinder temperature of 190°C, a die temperature of 40°C, an injection pressure of 150 MPa, an injection speed of 80 mm/sec. and a metering value of 60 (a screw was retracted by 60 mm to secure a storage area for an injected material by 60 mm in a cylinder). The respective results are indicated in Table 2.

**Table 2**

| | Proportion of raw material incorporated (%) | | | Bending strength (MPa) | Flow length (mm) |
|---|---|---|---|---|---|
| | Kenaf | Talc | PP | | |
| * Example 1 | 40 | - | 60 | 60 | 360 |
| * Example 2 | 30 | - | 70 | 50 | 420 |
| Example 3 | 50 | - | 50 | 68 | 310 |
| Example 4 | 60 | - | 40 | 78 | 260 |
| * Example 5 | 70 | - | 30 | 60 | 190 |
| Comparative Example 1 | - | 30 | 70 | 52 | 450 |

| | | | | | |
|---|---|---|---|---|---|
| * Reference | | | | | |

According to Table 2, it could be confirmed that (Reference) Examples 1 to 5 in which the incorporation ratio between the raw materials (kenaf: PP) ranged from 3:7 to 7:3 had a bending strength of 50 to 78 MPa and a bar flow length of 190 to 420
mm, and thus had sufficient bending property and excellent flowability represented by the bar flow length as an index. It could be confirmed that (Reference) Examples 1 to 5 exhibited characteristic features equivalent to or more excellent than those of Comparative Example 1 as a conventional product.

### (2-2) Degree of reduction in weight and degree of amount of carbon dioxide (CO₂) emissions

The degree of reduction in weight and degree of the amount of carbon dioxide emissions were calculated as described below using the respective test pieces having thickness of 2 mm of Reference Example 6 and Comparative Example 2 different in thickness from the respective test pieces having thickness of 4 mm of Reference Example 1 and Comparative Example 1, that were obtained in the above section "1. Production of thermoplastic resin molded article". Results are indicated in Table 3.

### <Degree of reduction in weight>

The weight ratio of Reference Example 6 was calculated while the weight of Comparative Example 2 as a conventional product was defined as 1.

### <Degree of amount of carbon dioxide emissions>

The ratio of carbon dioxide emissions of Reference Example 6 was calculated while the amount of carbon dioxide emissions of Comparative Example 2 as a conventional product was defined as 1. Details of the amounts of carbon dioxide emissions of the respective items used in this calculation were indicated in Table 4.

**Table 3**

| | Proportion of raw material incorporated (%) | | | Water content (%) | Thickness (mm) | Weight ratio with respect to Comparative Example 2 | CO₂ emission ratio with respect to Comparative Example 2 |
|---|---|---|---|---|---|---|---|
| | Kenaf | Talc | PP | | | | |
| * Example 6 | 40 | - | 60 | 0.4 | 2.0 | 0.90 | 0.81 |
| Comparative Example 2 | - | 30 | 70 | - | 2.0 | 1 | 1 |

| | | | | | | | |
|---|---|---|---|---|---|---|---|
| [0059] * Reference | | | | | | | |

18

**Table 4**

| | | * Example 6 | Comparative Example 2 |
|---|---|---|---|
| | Kenaf | 4.29 | - |
| | Talc | - | 3.86 |
| CO₂ emission (relative value) | PP | 23.86 | 30.90 |
| | Production of pellet | 5.15 | 5.72 |
| | Injection molding | 15.80 | 17.56 |
| | Incineration | 32.28 | 41.96 |
| | Total (%) | 81.38 | 100 |

| | | | |
|---|---|---|---|
| * Reference | | | |

According to Table 3, it could be confirmed that Reference Example 6 containing as a raw material kenaf fiber (1.4 g/cm³) with a lower density than that of talc (2.7 g/cm³) was reduced in weight by 10% as compared with Comparative Example 2 identical in thickness of the test piece.

According to Tables 3 and 4, it could be confirmed that the amount of carbon dioxide emissions of Reference Example 6 was reduced by about 20% as compared with Comparative Example 2 identical in thickness of the test piece.

### (2-3) Amount of rust generated in molding die and presence or absence of silver occurrence

Evaluated was the amount of rust generated in a molding die when the respective test pieces of Reference Example 6 (water content: 0.4%), Reference Example 7 (water content: 0.2%) and Comparative Example 3 (water content: 1.0%) different in water content of the kenaf/PP pellet (thermoplastic resin composition) at the time of injection molding, which were obtained in the above section "1. Production of thermoplastic resin molded article", were subjected to injection molding 100 times at a molding temperature of 210°C to prepare molded articles. Further, the presence or absence of silver (shininess) occurring on the surfaces of the molded articles was evaluated.

As regards the amount of rust generated in the die, the area of rust generated when injection molding was carried out 100 times at a water content of 1.0% (Comparative Example 3) was defined as 10 and the area of rust generated when no rust was generated was defined as 0, and the degree of rust therebetween was visually evaluated in 11 grades of 0 to 10. Additionally, the presence or absence of silver occurrence was visually evaluated. Results are indicated in Table 5.

**Table 5**

| | Proportion of raw material incorporated (%) | | Water content (%) | Thickness (mm) | Amount of rust generated in die (evaluated as Grades 0 to 10) | Occurrence of silver |
|---|---|---|---|---|---|---|
| | Kenaf | PP | | | | |
| * Example 6 | 40 | 60 | 0.4 | 2.0 | 4 | Absent |
| * Example 7 | 40 | 60 | 0.2 | 2.0 | 0 | Absent |
| Comparative Example 3 | 40 | 60 | 1.0 | 2.0 | 10 | Present |

| | | | | | | |
|---|---|---|---|---|---|---|
| * Reference | | | | | | |

According to Table 5, it could be confirmed that the corrosive action to the molding die could be reduced by reducing the water content of the material before injection molding to 0.4% or less (making as close to 0% as possible) as in Reference Examples 6 and 7, as compared with Comparative Example 3 in which the water content of the material before injection molding was 1.0%. When the amount of rust generated was calculated by visually evaluating the amount of rust generated in 11 grades of 0 to 10, it could be confirmed that the amount of rust generated was reduced by about 60% or more in Reference Example 7 as compared with Comparative Example 3.

Further, it could be confirmed that the occurrence of silver on the surfaces of the molded article could also be reduced by controlling the water content.

In view of the above matter, it could be confirmed that the amount of steam at the time of molding was reduced by controlling the water content of the material at the time of injection molding to 0.4% or less, thereby making it possible to sufficiently inhibit rusting in the injection molding die and to reduce the load on the molding die. Further, it becomes possible to improve the maintainability of the molding die without affecting the productivity or the quality of the molded article (product). Also, it was found to be possible to inhibit the transfer of rust from the die and a defective appearance on the surfaces of the molded article such as an occurrence of silver or the like, and to improve 20 the design.

### 3. Air cleaner case cap

### Embodiment 1

In this Embodiment 1, an air cleaner case cap in an air cleaner case which is an automobile component as a thermoplastic resin molded article of the present invention is exemplified.

### (3-1) Configuration of air cleaner case

As shown in Fig. 1, an air cleaner case 10 is provided with an air cleaner case main body 2 and an air cleaner case cap 1 of Embodiment 1.

The air cleaner case main body 2 is formed by injection molding of a thermoplastic resin composition containing talc as a reinforcing resin material.

The air cleaner case cap 1 is a cap body obtained by drying kenaf/PP pellets prepared in Reference Example 1 in the above section "1. Production of thermoplastic resin molded article" at a temperature of 110°C for 4 hours using a resin dryer to reduce the water content of the material to 0.4% or less, and carrying out injection molding using an injection molding machine "IS 450E-27A" manufactured by TOSHIBA MACHINE CO., LTD. at a molding temperature of 190°C and a die temperature of 15°C.

The air cleaner case cap 1 has a plate-like top plate part 11 having a thickness of 1.5 to 2.5 mm in which a rib 12 having a protrusion amount of 1.0 to 30 mm and a boss 13 having a protrusion amount of 5.0 to 40 mm are formed on one surface side (on a side of the inner surface of the cap body), and has sufficient strength.

Further, the air cleaner case cap 1 is formed with a hinge part 14, and has an openable/closable configuration as a cap body of the air cleaner case via this hinge part 14, as shown in Fig. 2.

This hinge part 14 is formed with four sets of protruding parts (ribs) 141 at corresponding sites on both the surfaces of a plate-like part [base part (not shown)] (namely, four sets of protruding parts 141 are formed on both the one surface side and the other surface side of the base part). Therefore, the hinge part 14 to which heavy load may be applied has a sufficiently reinforced configuration.

### (3-2) Degree of sink (recess) at place for forming rib

The depth of a recess (sink) 15 (maximum depth x) due to molding shrinkage, created at a site, corresponding to the rib 12 formed on one surface side, on the other surface side [design surface (outer surface of the cap body)] of the air cleaner case cap 1, was measured using an electron microscope, with reference to an I-I-line cross section (Fig. 3) of an essential part A in Fig. 2. As a result, the depth of the recess was 0.05 mm.

In contrast, talc PP pellets prepared in Comparative Example 1 in the above section "1. Production of thermoplastic resin molded article" were subjected to injection molding at a temperature of 220°C and a die temperature of 15°C using an injection molding machine "IS 450E-27A" manufactured by TOSHIBA MACHINE CO., LTD. to form a comparative molded article in a shape similar to that of the air cleaner case cap of Embodiment 1. The depth of the recess (sink) due to molding shrinkage created at a site corresponding to the rib at the same place was 0.11 mm.

In view of the above matter, it could be confirmed that the air cleaner case cap of Embodiment 1 obtained by a specific production process exhibited a reduced degree of the recess (so called, sink) created by molding shrinkage when a protruding part such as a rib and a boss was formed in injection molding, and exhibited an excellent appearance quality.

### 4. Effects of Examples

From the above results, it could be confirmed that the thermoplastic resin molded article of the present invention containing a plant fiber in a specific proportion was light in weight and small in environmental impact from the viewpoint of carbon neutrality (namely, small in amount of carbon dioxide emissions based on carbon neutrality). Further, it could be confirmed that a thermoplastic resin composition having a water content controlled to a specific value had been obtained by injection molding, and thus was sufficiently inhibited in terms of the transfer of rust from a die to the surfaces of a molded article and a defective appearance caused by the occurrence of silver and the like, and exhibited an excellent appearance quality.

Since water content in the thermoplastic resin composition as a starting material is controlled in the present production method of a thermoplastic resin molded article, it could be confirmed that the amount of steam at the time of molding was reduced and rusting in the injection molding die was sufficiently suppressed. In addition, it could be confirmed to be possible to inhibit the transfer of rust from the die to the surfaces of the molded article and a defective appearance on the surfaces of the molded article such as an occurrence of silver and the like, and to improve the design of the resultant thermoplastic resin molded article. Further, it could be confirmed that, since a thermoplastic resin composition containing a plant fiber was used as a raw material, it was possible to reduce the amount of carbon dioxide emissions based on carbon neutrality and to efficiently produce a lightweight thermoplastic resin molded article. Moreover, it could be confirmed that, since the load on the molding die could be reduced, thereby improving the maintainability of the molding die without affecting the productivity or the quality of the molded article (product).

It is noted that the foregoing examples have been provided merely for the purpose of explanation and are in no way to be construed as limiting of the present invention. While the present invention has been described with reference to exemplary embodiments, it is understood that the words which have been used herein are words of description and illustration, rather than words of limitation. Changes may be made, within the purview of the appended claims, as presently stated and as amended, without departing from the scope and spirit of the present invention in its aspects. Although the present invention has been described herein with reference to particular structures, materials and embodiments, the present invention is not intended to be limited to the particulars disclosed herein; rather, the present invention extends to all functionally equivalent structures, methods and uses, such as are within the scope of the appended claims.

The present invention is not limited to the embodiment described above, or change various modifications are possible within the scope of the claims of the present invention.

### [INDUSTRIAL APPLICABILITY]

In the present invention, the thermoplastic resin molded article and production method thereof can be utilized in a wide field including an automobile related field, an architecture related field and a home electric appliance related field. More useful is in a technical field including an interior material, an exterior material and a structural material for an automobile, a railcar, a ship, an aircraft and others. The present invention can be suitably utilized in an automobile related field including automobile-related products such as an interior material for automobiles, an exterior material for automobiles, and an engine-related part for automobiles (for example, an air cleaner case), and the like in particular.

### [EXPLANATIONS OF NUMERALS]

10: air cleaner case, 1: air cleaner case cap, 11: top plate part, 12: rib, 13: boss, 14: hinge part, 141: protruding part, 15: recess, 2: air cleaner case main body, 61: bar flow die

## Claims

1. A thermoplastic resin molded article comprising one or two thermoplastic resin(s) and a plant fiber as main components, such that the ratio of the sum of the thermoplastic resin(s) and the plant fiber is in the range from 90% to 100% by mass when an amount of the entire thermoplastic resin molded article is defined as 100% by mass, and having a content ratio between said thermoplastic resin(s) and said plant fiber of 4:6 to 5:5 (thermoplastic resin: plant fiber), wherein the one thermoplastic resin is a polyolefin or wherein the two thermoplastic resins are a polyolefin in combination with an acid-modified polyolefin,
wherein said thermoplastic resin molded article is obtained by injection molding of a thermoplastic resin composition that comprises the one or two thermoplastic resin(s) and a plant fiber and has a water content of 0.4% or less.

2. The thermoplastic resin molded article according to Claim 1,
wherein said thermoplastic resin molded article is provided with a plate-like part having a thickness of 0.5 mm to 10 mm, and a protruding part that is formed at one surface side of said plate-like part and has a protrusion amount of 0.5 mm to 50 mm, and
wherein a depth of a recess at a position corresponding to said protruding part on the other surface of said plate-like part is 0.1 mm or less.

3. The thermoplastic resin molded article according to Claim 1 or 2,
wherein the melt flow rate of said polyolefin is in the range from 1.0 to 200 g/10 min.

4. The thermoplastic resin molded article according to any one of Claim 1 to 3,
wherein in case where the acid-modified polyolefin in contained, a proportion of the acid-modified polyolefin incorporated is in the range from 1% to 30% by mass when an amount of the entire thermoplastic resin is defined as 100% by mass.

5. The thermoplastic resin molded article according to any one of Claim 1 to 4,
wherein the average fiber length of said plant fiber is in the range of 2 to 100 mm.

6. A production method of a thermoplastic resin molded article comprising one or two thermoplastic resin(s) and a plant fiber as main components, such that the ratio of the sum of the thermoplastic resin(s) and the plant fiber is in the range from 90% to 100% by mass when an amount of the entire thermoplastic resin molded article is defined as 100% by mass, and having a content ratio between said thermoplastic resin and said plant fiber of 4:6 to 5:5 (thermoplastic resin: plant fiber), wherein the one thermoplastic resin is a polyolefin or wherein the two thermoplastic resins are a polyolefin in combination with an acid-modified polyolefin,
wherein a thermoplastic resin composition that comprises the one or two thermoplastic resin(s) and a plant fiber and has a water content of 0.4% or less is subjected to injection molding.

7. The production method of a thermoplastic resin molded article according to claim 6,
wherein the average fiber length of said plant fiber is in the range of 2 to 100 mm.

## Patentansprüche

1. Thermoplastischer Harz-Formkörper umfassend ein oder zwei thermoplastische(s) Harz(e) und eine Pflanzenfaser als Hauptbestandteile, derart, dass das Verhältnis der Summe der/des thermoplastischen Harze(s) und der Pflanzenfaser in dem Bereich von 90 Masse-% bis 100 Masse-% ist, wenn eine Menge des gesamten thermoplastischen Harz-Formkörpers als 100 Masse-% definiert ist, und aufweisend ein Gehalt-Verhältnis zwischen dem/den thermoplastischen Harz(en) und der Pflanzenfaser von 4.6 bis 5.5 (thermoplastisches Harz: Pflanzenfaser),
wobei das eine thermoplastische Harz ein Polyolefin ist oder wobei die zwei thermoplastischen Harze ein Polyolefin in Kombination mit einem säuremodifizierten Polyolefin sind,
wobei der thermoplastische Harz-Formkörper durch Spritzgießen einer thermoplastischen Harzzusammensetzung, die das eine oder zwei thermoplastische Harz(e) und eine Pflanzenfaser umfasst und einen Wassergehalt von 0,4 % oder weniger aufweist, erhalten ist.

2. Thermoplastischer Harz-Formkörper nach Anspruch 1,
wobei der thermoplastische Harz-Formkörper vorgesehen ist mit einem plättchenartigen Teil mit einer Dicke von 0,5 mm bis 10 mm und einem überstehenden Teil, der an einer Oberflächenseite des plättchenartigen Teils gebildet ist und ein Überstandsmaß von 0,5 mm bis 50 mm aufweist, und
wobei eine Tiefe einer Aussparung an einer Position, die dem überstehenden Teil auf der anderen Oberfläche des plättchenartigen Teils entspricht, 0,1 mm oder weniger ist.

3. Thermoplastischer Harz-Formkörper nach Anspruch 1 oder 2,
wobei die Schmelzflussrate des Polyolefins in dem Bereich von 1,0 bis 200 g/10min ist.

4. Thermoplastischer Harz-Formkörper nach einem der Ansprüche 1 bis 3,
wobei im Fall des enthaltenen säuremodifizierten Polyolefins, ein Anteil des inkorporierten säuremodifizierten Polyolefins in dem Bereich von 1 Masse-% bis 30 Masse-% ist, wenn eine Menge des gesamten thermoplastischen Harzes als 100 Masse-% definiert ist.

5. Thermoplastischer Harz-Formkörper nach einem der Ansprüche 1 bis 4,
wobei die durchschnittliche Faserlänge der Pflanzenfaser in dem Bereich von 2 bis 100 mm ist.

6. Herstellungsverfahren eines thermoplastischen Harz-Formkörpers umfassend ein oder zwei thermoplastische(s) Harz(e) und eine Pflanzenfaser als Hauptbestandteile, derart, dass das Verhältnis der Summe der/des thermoplastischen Harze(s) und der Pflanzenfaser in dem Bereich von 90 Masse-% bis 100 Masse-% ist, wenn eine Menge des gesamten thermoplastischen Harze-Formkörpers als 100 Masse-% definiert ist, und aufweisend ein Gehalt-Verhältnis zwischen dem/den thermoplastischen Harz(en) und der Pflanzenfaser von 4.6 bis 5.5 (thermoplastisches Harz: Pflanzenfaser),
wobei das eine thermoplastische Harz ein Polyolefin ist oder wobei die zwei thermoplastischen Harze ein Polyolefin in Kombination mit einem säuremodifizierten Polyolefin sind,
wobei eine thermoplastische Harzzusammensetzung, die ein oder zwei thermoplastische(s) Harz(e) und eine Pflanzenfaser umfasst und einen Wassergehalt von 0,4% oder weniger aufweist, einem Spritzgießen unterzogen wird.

7. Herstellungsverfahren eines thermoplastischen Harz-Formkörpers nach Anspruch 6,
wobei die durchschnittliche Faserlänge der Pflanzenfaser in dem Bereich von 2 bis 100 mm ist.

## Revendications

1. Article moulé en résine thermoplastique comprenant une ou deux résines thermoplastiques et une fibre végétale à titre de composants principaux, de façon que le rapport de la somme des résines thermoplastiques et de la fibre végétale s'inscrive dans la plage de 90 à 100 % en poids quand une quantité totale de l'article moulé en résine thermoplastique est définie à 100 % en poids, et ayant un rapport de teneurs entre ladite ou lesdites résines thermoplastiques et ladite fibre végétale de 4:6 à 5:5 (résine thermoplastique:fibre végétale),
dans lequel la résine thermoplastique est une polyoléfine ou dans lequel les deux résines thermoplastiques sont une polyoléfine en combinaison avec une polyoléfine modifiée par un acide,
dans lequel ledit article moulé en résine thermoplastique est obtenu par moulage par injection d'une composition de résine thermoplastique qui comprend la ou les deux résines thermoplastiques et une fibre végétale et a une teneur en eau de 0,4 % ou moins.

2. Article moulé en résine thermoplastique selon la revendication 1,
dans lequel ledit article moulé en résine thermoplastique comprend une partie de type plaque ayant une épaisseur de 0,5 à 10 mm, et une partie saillante qui est formée sur une surface de ladite partie de type plaque et correspond à une quantité de saillie de 0,5 à 50 mm, et
dans lequel la profondeur d'un évidement à une position correspondant à ladite partie saillante sur l'autre surface de ladite partie de type plaque est de 0,1 mm ou moins.

3. Article moulé en résine thermoplastique selon la revendication 1 ou 2,
dans lequel l'indice de fluidité à chaud de ladite polyoléfine est dans la plage de 1,0 à 200 g/10 min.

4. Article moulé en résine thermoplastique selon l'une quelconque des revendications 1 à 3,
dans lequel, dans le cas où la polyoléfine modifiée par un acide est utilisée, une proportion de la polyoléfine modifiée par un acide est dans la plage de 1 à 30 % en poids quand une quantité totale de la résine thermoplastique est définie à 100 % en poids.

5. Article moulé en résine thermoplastique selon l'une quelconque des revendications 1 à 4,
dans lequel la longueur de fibre moyenne de ladite fibre végétale est dans la plage de 2 à 100 mm.

6. Procédé de production d'un article moulé en résine thermoplastique comprenant une ou deux résines thermoplastiques et une fibre végétale à titre de composants principaux, de façon que le rapport de la somme des résines thermoplastiques et de la fibre végétale s'inscrive dans la plage de 90 à 100 % en poids quand une quantité totale de l'article moulé en résine thermoplastique est définie à 100 % en poids, et ayant un rapport de teneurs entre ladite résine thermoplastique et ladite fibre végétale de 4:6 à 5:5 (résine thermoplastique:fibre végétale),
dans lequel la résine thermoplastique est une polyoléfine ou dans lequel les deux résines thermoplastiques sont une polyoléfine en combinaison avec une polyoléfine modifiée par un acide,
dans lequel la composition de résine thermoplastique qui comprend la ou les deux résines thermoplastiques et une fibre végétale et a une teneur en eau de 0,4 % ou moins est soumise à un moulage par injection.

7. Procédé de production d'un article moulé en résine thermoplastique selon la revendication 6,
dans lequel la longueur de fibre moyenne de ladite fibre végétale est dans la plage de 2 à 100 mm.
